# EUROPEAN PATENT APPLICATION

(11) **EP 4 636 973 A1**
(43) Date of publication of application: **22.10.2025**
(21) Application number: 24170281.0
(22) Date of filing: 15.04.2024
(51) Int. Cl.: H02J 3/14, C25B 1/04, H02J 15/00, H02J 3/32

(54) **AN ELECTROLYSIS SYSTEM HAVING A REDUCED RAMP-UP DURATION, AN ELECTRICAL POWER SYSTEM, A METHOD FOR REDUCING A RAMP-UP DURATION OF AN ELECTROLYSIS SYSTEM, A COMPUTER PROGRAM, A COMPUTER-READABLE STORAGE MEDIUM, A CONTROLLER AND AN ELECTRICAL CONVERTER**

(71) Applicant: Siemens Energy Global GmbH & Co. KG, 81739 München (DE)
(72) Inventor: Loku, Fisnik, 90768 Fürth (DE); Langenberg, Nils, 90461 Nürnberg (DE); Schumann, Sven, 91452 Wilhermsdorf (DE); Bendig, Marvin, 90513 Zirndorf (DE); Craciun, Bogdan, 91052 Erlangen (DE)

(57) **Abstract**

The invention relates to an electrolysis system (1) and a method for operating the electrolysis system (1) comprising an electrolyzer (2) which is electrically connected to an electrical energy source (3) via an electrolysis converter (4) and adapted to absorb an electrical power input *(P_{EL})* and to convert the electrical power input (*P_{EL}*) into an energy carrier, wherein the electrolysis converter (4) is adapted to convert an electrical power output (*P_{Output}*) provided by the electrical energy source (3) into the electrical power input *(P_{EL})* and to provide the electrical power input (*P_{EL}*) to the electrolyzer (2). In order to reduce the ramp-up duration (*t_{Recovery,1}, t_{Recovery,2}*) of the electrolysis system (1), the electrolysis converter (4) is adapted to redirect the electrical power input (*P_{EL}*) at least partly to an electrical load (5) which is adapted to absorb the electrical power input (*P_{EL}*) faster than a ramp-up rate of the electrolyzer (2).

## Description

### Technical Field

The invention relates to an electrolysis system having a reduced ramp-up duration, an electrical power system comprising said electrolysis system, a method for reducing a ramp-up duration of an electrolysis system, a computer program, a computer-readable storage medium, a controller and an electrical converter comprising said controller.

### Technological Background

The number of electrolysis systems installed in existing transmission grids is constantly increasing. In order to accelerate the production of hydrogen from renewable energy sources, the capacity of electrolysis systems for planned projects is reaching the gigawatt range as conventional power supply systems are continuously replaced by renewable energy sources, most of which are inverter-based systems. This creates additional challenges for the AC grid and transmission system operators (TSOs) in terms of AC grid stability. With this in mind, TSOs are beginning to define requirements for the connection of electrolyzers to existing networks. Some of the fundamental requirements that are being defined are the Fault Ride-Through (FRT) requirements, which define the operating areas in which an electrolyzer must remain connected to an appropriate adjacent electrical system, and the operating areas in which electrolyzers are allowed to disconnect from the electrical system.

As the number of installed electrolysis systems continues to grow, these requirements must be taken into account, otherwise the entire grid could become unstable and lead to widespread blackouts. The problem of conventional electrolysis systems is that they have a ramp-up duration ranging from several seconds to several minutes, whereas the transmission system operators require a maximum allowable ramp-up duration of 1 second after a fault event in the electrical network.

### Summary of the invention

It is therefore an object of the present invention to provide an electrolysis system with a reduced ramp-up duration.

A solution is provided by the subject matter according to the independent claims. Advantageous additional embodiments of the invention are described by the dependent claims, the following description and the Figures.

The invention relates to an electrolysis system comprising an electrolyzer which is electrically connected to an electrical energy source via an electrolysis converter and adapted to absorb an electrical power input and to convert the electrical power input into an energy carrier, wherein the electrolysis converter is adapted to convert an electrical power output provided by the electrical energy source into the electrical power input and to provide the electrical power input to the electrolyzer.

According to the invention, the electrolysis converter is adapted to redirect the electrical power input at least partly to an electrical load which is adapted to absorb the electrical power input.

In other words, the electrical power source may be an electrical power station in an island operation mode or an electrical network in a network operation mode. The electrolysis system may comprise at least one electrolyzer which may be adapted to convert the electrical power input into the energy carrier such as hydrogen.

The electrolysis converter may be adapted to convert the electrical power output into the electrical power input, particularly an alternating current from the electrical energy source into a direct current for the electrolyzer. Here, the electrical power output received by the electrolysis converter may correspond to the electrical power input provided by the electrolysis converter to the electrolyzer. The electrolysis converter may comprise an inverter which may be adapted to redirect at least partly the electrical power input to the electrical load instead of the electrolyzer by means of a controlled switching. For instance, the electrolysis converter may comprise a chopper which may be adapted to adjust the electrical power that is drawn from the electrical power input to the electrical load.

The electrical load may be electrically connected to the electrolysis converter and is adapted to absorb the electrical power input provided by the electrolysis converter, particularly all of the electrical power input, instead of the electrolyzer. The electrical load may be variable in absorbing electrical power, wherein the electrolysis converter may be adapted to deduct a load electrical power input directed to the electrical load from the electrical power input provided to the electrolyzer. For this, the converter may comprise a switching arrangement for providing a controlled switching.

The electrical load may be an electrical resistance which may be adapted to absorb the electrical power input provided to the electrolyzer instead of the electrolyzer, particularly all of the electrical power input. For instance, the electrical load may comprise a chopper controlled resistance, wherein the electrolysis converter and/or the electrical load is adapted to actively control an active power dissipated by the electrical load. Here the electrolysis converter may be adapted to actively control the electrical power input absorbed or dissipated by the electrical load by means of an active switching.

Additionally or alternatively, the electrical load may comprise an energy storage system wherein the electrical load may have an increase rate of absorbing the electrical power input being faster than a maximum ramp-up rate of the electrolyzer.

Additionally, the electrolysis system may comprise a plurality of electrolyzes wherein the ramp-up duration may be the longest ramp-up duration of the plurality of electrolyzes.

This provides the technical effect that the ramp-up duration of the electrolysis system is reduced by redirecting the electrical power input at least partly to the electrical load instead of the electrolyzer. This allows to meet the requirements of the transmission system operators regarding a return to a pre-fault conversion level of an electrolyzer after a fault ride-through event.

The electrolysis system also includes embodiments by which additional advantages are obtained.

In one embodiment, the electrical load is adjustable in absorbing the electrical power input between zero and at least a maximum electrical power input level of the electrolyzer. In other words, the electrical load and/or the converter may be adapted to adjust the electrical power absorbed by the electrical load from zero to the maximum electrical power input of the electrolyzer and/or to a corresponding electrical output level received by the electrolysis converter from the electrical energy source. This provides the advantage that the electrical load may replace the electrolyzer in absorbing the electrical power output from the electrical power source right after a fault event where the electrolyzer may have shut down. Further, the electrical load may absorb at least partly the electrical power input of the electrolyzer at its instantaneous or increased ramp-up rate until the electrolyzer has ramped-up. Thereby, the ramp-up speed of the electrolysis system is increased.

When the electrolyzer has ramped-up, the load electrical power input may be reduced to zero by the electrolysis converter. For instance, the electrolysis converter may be adapted to provide a controlled switching and/or to disconnect the electrical load. Thereby, a waste of electrical power is reduced.

In one embodiment, the electrical load is adjustable in absorbing the electrical power input with a decrease rate of absorbing the electrical power input being equal to or slower than a maximum ramp-up rate of the electrolyzer. In other words, the electrical load and/or the converter is adapted to redirect the electrical power input from the electrical load to the electrolyzer at a rate that is smaller than or equal to the maximum ramp-up rate of the electrolyzer.

Additionally, the decrease rate of absorbing the electrical power input of the electrical load is smaller than the maximum ramp-up rate minus a safety offset in order to account for aging effects of the electrolyzer.

Additionally or alternatively, if the electrolysis system comprises a plurality of electrolyzers, the smallest maximum ramp-up rate of the plurality of electrolyzes may be used.

This provides the advantage that the electrolyzer does not receive an increase rate of electrical power input that is above its maximum ramp-up rate. Thereby, an unwanted shutdown of the electrolyzer during a ramp-up can be avoided.

In one embodiment, the electrical load comprises a load converter which electrically connects the electrical load to the electrolysis converter and which is adapted to adjust the absorption of the electrical power input by the electrical load. In other words, the electrical load may be electrically connected to the electrolysis converter via a load converter which may adjust the load electrical power that is redirected at least partly or deducted from the electrical power input. This provides the advantage that conventional electrolysis systems may easily be retrofitted and that the electrical load may be a simple electrical resistance whose absorption of electrical power may be controlled by the load converter.

In one embodiment, the electrical load is electrically connected to the electrolysis converter in parallel to the electrolyzer or in parallel to the electrical energy source. In other words, the electrical load may be electrically connected to a direct current side of the electrolysis converter or to an alternating current side of the electrolysis converter. This provides the advantage that the amount of current conversion that is necessary to adjust the electrical power absorbed by the electrical load can be reduced. For example, with the electrical load comprising a chopper controlled resistance, the electrical load may be connected to the direct current side of the electrolysis converter.

Alternatively, with the electrical load comprising an energy storage system that requires an alternating current as input current, the electrical load may be connected to an alternating current side of the electrolysis converter.

The invention further relates to an electrical power system comprising said electrolysis system. The electrical power system may be a network of electrical components deployed to supply, transfer, and use electric power. In other words, the electrical power system may comprise an entirety of all technical equipment required for generation, transmission and distribution of electrical energy within a control zone of a distribution area where electrical energy is provided from a producer to a consumer.

The invention further relates to a method for reducing a ramp-up duration of an electrolysis system comprising an electrolyzer which is connected to an electrical energy source via an electrolysis converter, which converts an electrical power output provided by the electrical energy source into an electrical power input and provides the electrical power input to the electrolyzer which converts the electrical power input into an energy carrier, comprising the steps of:
- determining a voltage of the electrical power output dropping below a voltage threshold value and/or determining a shutdown of the electrolyzer;
- redirecting the electrical power input at least partly to an electrical load which absorbs the electrical power input.

In other words, the ramp-up duration may be a time period which the electrolyzer may require to ramp-up or boot from a zero conversion level to an operating point and/or the shutdown of the electrolyzer. The operating point may correspond to a previous operating point before a shutdown of the electrolyzer or a maximum conversion level of the electrolyzer.

An increase rate of absorbing electrical power of the electrolyzer may be increased by redirecting the electrical power input provided to the electrolyzer at least partly to the electrical load, wherein the electrical load may have a faster or instantaneous rate of absorbing electrical power than a maximum ramp-up rate of the electrolyzer. Here, the electrical power input may be redirected from a direct current side or an alternating current side of the electrolysis converter. Thus, the electrical power input directed to the electrical load may be entirely redirected or deducted from the electrical power input provided by the electrolysis converter after having determined the voltage drop and/or the shutdown of the electrolyzer and subsequently be decreased to zero until the electrolyzer has ramped-up.

This provides the technical effect that the ramp-up duration of the electrolysis system is reduced by redirecting the electrical power input at least partly to the electrical load instead of the electrolyzer. This allows to meet the requirements of the transmission system operators regarding a return to a pre-fault conversion level of an electrolyzer after a fault ride-through event.

Said method also includes embodiments by which additional advantages are obtained.

In one embodiment, the method further comprises the step of:
- adjusting the absorption of the electrical power input by the electrical load to a maximum electrical power input level of the electrolyzer after the determination of the voltage of the electrical power output dropping below the voltage threshold value and/or the shutdown of the electrolyzer.

In other words, all of the electrical power input or of the electrical power output received by the electrolysis converter may be redirected from the electrolyzer to the electrical load such that the electrical load may receive all of the entire electrical power input instead of the electrolyzer after the determination of the voltage of the electrical power output dropping below the voltage threshold value and/or the shutdown of the electrolyzer. This provides the advantage that the electrical load may absorb the electrical power input instead of the electrolyzer until the electrolyzer has ramped-up. This improves the network stability.

Additionally, if the electrolysis system comprises a plurality of electrolyzes, the biggest maximum electrical power input level of the plurality of electrolyzers may be used.

In one embodiment, the maximum electrical power input level of the electrolyzer corresponds to an operating point of the electrolyzer before the determination of the voltage of the electrical power output dropping below the voltage threshold value and/or the shutdown of the electrolyzer. In other words, the electrical power input may be absorbed by the electrical load until the electrolyzer has ramped-up to its previous operating point before the voltage drop and/or the shutdown of the electrolyzer. This provides the advantage that the electrical load may absorb the electrical power input instead of the electrolyzer until the electrolyzer has ramped-up, thereby improving network stability.

In one embodiment, the method further comprises the step of:
- decreasing simultaneously with ramping-up the electrolyzer the absorption of the electrical power input by the electrical load with a decrease rate of absorbing the electrical power input being equal to or slower than a maximum ramp-up rate of the electrolyzer.

In other words, all of the electrical power input may be redirected from the electrical load to the electrolyzer at a rate that is equal to or smaller than the maximum ramp-up rate of the electrolyzer.

Additionally, the decrease rate of absorbing the electrical power input of the electrical load may be smaller than the maximum ramp-up rate minus a safety offset in order to account for aging effects of the electrolyzer.

Additionally or alternatively, if the electrolysis system comprises a plurality of electrolyzes, the smallest decrease rate of absorbing the electrical power input of the plurality of electrolyzers may be used.

This provides the advantage that the electrolyzer does not receive an increase of electrical power input that is above its maximum ramp-up rate. Thereby, an unwanted shutdown of the electrolyzer during the ramp-up can be avoided.

In one embodiment, the method further comprises the step of:
- adjusting the absorption of the electrical power input by the electrical load to zero after the electrolyzer has ramped-up at least partly.

In other words, the absorption of electrical power by the electrical load, particularly of the electrical power input, is adjusted to zero when the electrolyzer has ramped-up, particularly to a previous operating point. For instance, the electrical load may be disconnected from the electrolysis converter when the electrolyzer has ramped-up. This provides the advantage that a waste of electrical power may be reduced.

The invention further relates to a computer-program comprising instructions which, when the program is executed by a controller, particularly by an electrolysis system controller and/or an electrolysis converter controller and/or a load converter controller, cause the controller to carry out the steps of said method. The controller may comprise means to execute said method, particularly means to control an operating point of an electrolyzer and/or a conversion level of the electrolysis converter. Particularly, the controller may comprise means to control a controlled switching of the electrolysis converter or load converter for redirecting the electrical power input between the electrolyzer and the electrical load. The controller may further comprise means to adjust the absorption of electrical power by the electrical load, particularly means to control a switching operation of the load converter.

The invention also relates to a computer readable storage medium having stored thereon said computer program. In other words, the computer readable storage medium may be a punched card, a (floppy) disk storage medium, a hard disk, a CD, a DVD, an USB (Universal Serial Bus) storage device, a RAM (Random Access Memory), a ROM (Read Only Memory) and/or an EPROM (Erasable Programmable Read Only Memory). Preferably, the computer readable storage medium may be a RAM or a ROM, wherein particularly a flash memory is used. The computer readable storage medium may also be a data communication network which allows downloading a program code, such as the Internet for example, or further systems.

The invention further relates to a controller, particularly to an electrolysis system controller and/or an electrolysis converter controller and/or a load converter controller comprising said computer-readable storage medium and optionally means to execute said method. The controller may be programmable logic controller (PLC). The controller may comprise at least one processor and said computer readable storage medium, wherein the computer readable storage medium comprises said computer program which, when executed by the at least one processor, cause the controller to perform the method as described above. In other words, the at least one processor may be a microprocessor and/or a microcontroller and/or a FPGA (Field Programmable Gate Array and/or a DSP (Digital Signal Processor). The controller may further comprise means to execute said method as described above, particularly means to control an operating point of an electrolyzer and/or a conversion level of the electrolysis converter and/or the load converter. Particularly, the controller may comprise means to control a controlled switching of the electrolysis converter and/or load converter for redirecting the electrical power input between the electrolyzer and the electrical load. The controller may further comprise means to adjust the absorption of electrical power by the electrical load, particularly means to control a switching operation of the load converter.

The invention also relates to an electrical converter for an electrolysis system, comprising said controller.

The invention also relates to realizations comprising a combination of the features of several of the described embodiments.

### Brief description of the drawings

The present disclosure will be more readily appreciated by reference to the following detailed description when being considered in connection with the accompanying drawings in which:
- Figure 1: shows a schematic time-voltage chart of a fault ride-through characteristic of a conventional electrolysis system and the electrolysis system with a reduced ramp-up duration in comparison;
- Figure 2: shows a schematic view of said electrolysis system with the reduced ramp-up duration; and
- Figure 3: shows a schematic flow chart of a method for reducing the ramp-up duration of an electrolysis system.

In the following, the invention will be explained in more detail with reference to the accompanying figure. In the Figure, like elements are denoted by identical reference numerals and repeated description thereof may be omitted in order to avoid redundancies.

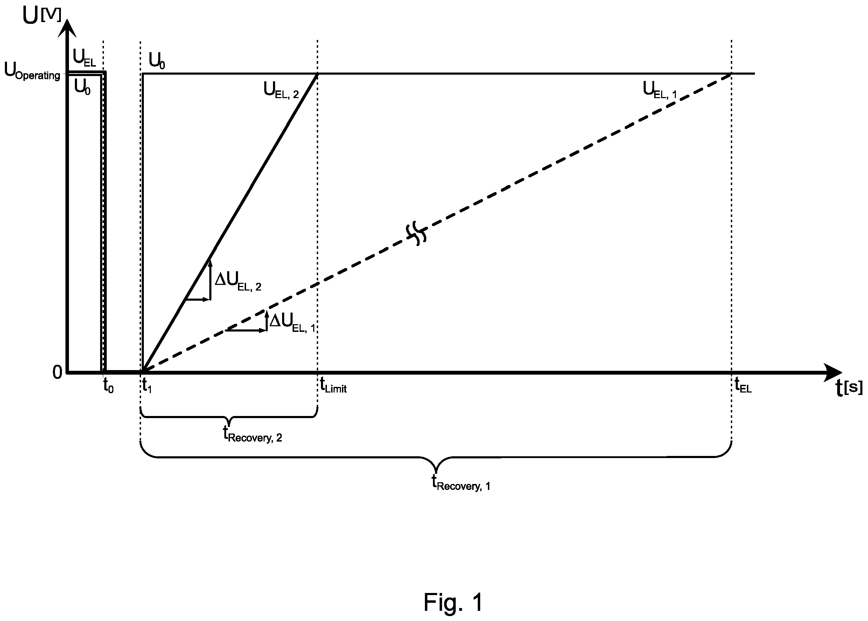

Figure 1 shows a schematic chart of an operating voltage of an electrolysis system ***U_{EL}*** over time ***t*** which operates at an operating voltage ***U_{Operating}*** which is provided by the electrical energy output having the voltage ***U*₀.** The electrolysis converter converts the operating voltage ***U_{Operating}*** into a corresponding direct current voltage for the electrolyzer.

At time ***t*₀**, a fault event in the electrical energy output commences wherein the voltage ***U*₀** of the electrical energy output drops below a voltage threshold value which may cause a shutdown of the electrolysis system. The fault event may have an unknown cause and may last until ***t*₁.** For example, the voltage threshold value may be **0*V*** such that the voltage ***U*₀** of the electrical power output drops from ***U_{Operating}*** to **0*V*** at ***t*₀.** Thus, the electrolysis system may shut down at ***t*₀.**

During the fault event between ***t*₀** and ***t*₁**, the operating point of the electrolysis system, particularly of the electrolyzer, is at **0*V*** due to the shutdown.

After the end of the fault event at ***t*₁**, the voltage ***U*₀** of the electrical power output from the electrical energy source goes back to ***U_{Operating}.*** However, the electrolysis system may take some time to ramp-up again after the shutdown starting from ***t*₁.** A conventional electrolysis system having a first ramp-up rate **Δ*U*_{*EL,*1}** requires at least a first ramp-up duration ***t*_{*Recovery,*1}** to come back to the previous operating point ***U_{Operating}*** before the shutdown or the fault event. However, this ramp-up duration of the conventional electrolysis system **Δ*U*_{*EL,*1}** is too long to fulfill network stability requirements from transmission system operators which set a maximum allowable time limit **t*_{Limit}*** which is shorter than the first ramp-up duration ***t*_{*Recovery,*1}.** For example, **t*_{Limit}*** may be smaller than or equal to 1 second, whereas the first ramp-up duration ***t*_{*Recovery,*1}** may take between several seconds to several minutes depending on a technology of the electrolyzer 2.

The aim of the proposed electrolysis system with a reduced ramp-up duration is thus to increase the first ramp-up rate from **Δ*U*_{*EL,*1}** to a second ramp-up rate **Δ*U*_{*EL,*2}** such that the second ramp-up duration ***t*_{*Recovery,*2}** of the electrolysis system is equal to or smaller than the maximum allowable time limit ***t_{Limit}.***

This can be achieved by connecting a further electrical load which can absorb the electrical power input that is provided to the electrolyzer at least partly instead of the electrolyzer. At *t*₁, the electrical load may absorb the entire electrical power input provided by the electrolysis converter to the electrolyzer which is subsequently decreased at a decrease rate equal to or smaller than the first ramp-up rate **Δ*U*_{*EL*,1}** until the electrolyzer has ramped-up. After the electrolyzer has ramped-up, the electrical power input absorbed by the electrical load becomes zero. Thus, over the second ramp-up duration ***tR*_{*ecovery,*2}*,*** the electrical load absorbs the electrical power input simultaneously with the electrolyzer, wherein an instantaneous or at least a faster ramp-up rate of the electrical load is used for providing a power balancing to the electrical network after a shutdown of the electrolyzer due to an unknown fault event between ***t*₀** and ***t*₁.**

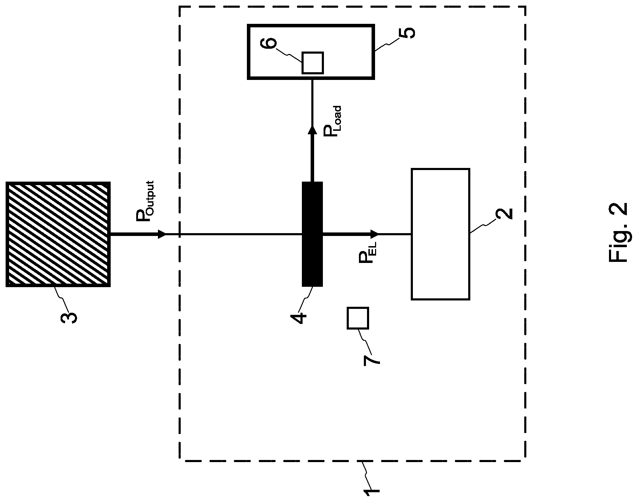

Figure 2 shows a schematic diagram of said electrolysis system 1 which comprises an electrolyzer 2 which is connected to the electrical energy source 3 via the electrolysis converter 4. The electrical energy source may be an electrical power station or an electrical network that is connected to the electrolysis converter 4. The electrolysis converter 4 may comprise an inverter and is further adapted to convert an electrical power output ***P_{Output}*** that is received from the electrical energy source 3 into an electrical power input ***P_{EL}*** for the electrolyzer 2. To reduce the ramp-up duration ***t*_{*Reconvery,*1}**, ***t*_{*Recovery,*2}** of the electrolyzer 2, the electrolysis system 1 further comprises an electrical load 5 which is electrically connected to the electrolysis converter 4.

For example, the electrical load may be connected to the electrolysis converter 4 on a direct current side or an alternating current side. The electrical load 5 is adapted to absorb the electrical power input ***P_{EL}*** provided by the electrolysis converter 4 to the electrolyzer, particularly either from the direct current side or the alternating current side of the electrolysis converter 4. The electrical load receives a load electrical power input ***P_{Load}*** from the electrolysis converter 4 which is deducted from the electrical power output received by the electrolysis converter 4and/or the electrical power input provided to the electrolyzer 2 by the electrolysis converter 4 by means of an active switching. The load electrical power input ***P_{Load}*** is adjusted by the electrolysis converter 4 between the maximum electrical power input ***P_{EL}*** provided to the electrolyzer 2 and zero.

Further, the electrical load 5 is variable in absorbing the electrical power input ***P_{EL}**,* wherein the electrical load 5 has an increase rate of absorbing electrical power which is faster than a maximum ramp-up rate **Δ*U*_{*EL,*1}** of the electrolyzer 2 and has a decrease rate of absorbing electrical power which is equal to or slower than the maximum ramp-up rate **Δ*U*_{*EL,*1}** of the electrolyzer 2.

At an operating point ***U_{operating}*** before a fault event before ***t*₀**, the electrolyzer 2 receives the electrical power input ***P_{EL}*** from the electrolysis converter 4 and the load electrical power input ***P_{Load}*** directed to the electrical load is zero. After ***t*₁**, particularly after an end of a voltage drop in the electrical power output received by the electrolysis converter and/or after an end of a shutdown of the electrolyzer 2 at ***t*₁**, the entire electrical power input ***P_{EL}*** that was provided to the electrolyzer 2 is redirected to the electrical load 5 at ***t*₁**. That is, the electrical power ***P_{Load}*** absorbed by the electrical load 5 equals the entire electrical power input ***P_{EL}**.* When the electrolyzer ramps-up after the fault event and/or the shutdown at ***t*₁**, the electrical power input ***P_{EL}*** provided to the electrolyzer 2 is increased by the electrolysis converter at a first ramp-up rate **Δ*U*_{*EL,*1}** which is equal to or smaller than a maximum ramp-up rate of the electrolyzer 2 whereas the electrical power ***P_{Load}*** absorbed by the electrical load is simultaneously decreased at a decrease rate equal to or smaller than a maximum ramp-up rate of the electrolyzer 2. This allows the ramp-up rate of the electrolyzer 2 to increase from **Δ*U*_{*EL,*1}** to **Δ*U*_{*EL,*2}.**

To adjust the load electrical power input ***P_{Load}*** absorbed by the electrical load 5, the electrolysis converter and/or the electrical load 5 comprises a load converter 6, which is adapted to adjust the load electrical power input ***P_{Load}*** which is deducted or drawn from the electrical power input ***P_{EL}*** provided by the electrolysis converter 4 to the electrolyzer 2.

The load electrical power input ***P_{Load}*** is continuously decreased at said decrease rate to zero, where the electrolyzer 2 has ramped-up.

For instance, the electrical load may be a resistance which is adapted to absorb at least the electrical power input ***P_{EL}.*** Alternatively, the electrical load 5 may be an energy storage system which has got a ramp-up rate that is faster than the maximum ramp-up rate **Δ*U*_{*EL,*1}** of the electrolyzer 2.

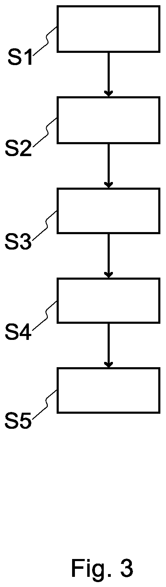

The electrolysis system 1 further comprises a controller 7 which is adapted to deduce the load electrical power input ***P_{Load}*** from the electrical power input ***P_{EL}*** provided to the electrolyzer 2 from the electrolysis converter 4 by means of the electrolysis converter 4 and/or the load converter 6. For this, the controller may be adapted to execute the steps of the method as stipulated in Figure 3.

Figure 3 shows a schematic flow chart of a method for reducing the ramp-up duration of an electrolysis system, particularly for the controller 7 and/or for the load converter 6. In a first step S1, a voltage ***U*₀** of the electrical power output ***P_{Output}*** is determined to drop below a voltage threshold value and/or a shutdown of the electrolyzer 2 is determined.

In a second step S2, the electrical power input ***P_{EL}*** is redirected at least partly to an electrical load 5 which absorbs the electrical power input ***P_{EL}.***

In a third step S3, the absorption of the electrical power input ***P_{EL}*** by the electrical load 5 is adjusted to a maximum electrical power input level of the electrolyzer 2 after the determination of the voltage ***U*₀** of the electrical power output ***P_{Output}*** dropping below the voltage threshold value and/or the shutdown of the electrolyzer 2.

In a fourth step S4, the absorption of the electrical power input ***P_{EL}*** by the electrical load 5 is decreased simultaneously with ramping-up the electrolyzer 2 with a decrease rate of absorbing the electrical power input ***P_{EL}*** being equal to or slower than a maximum ramp-up rate **Δ*U*_{*EL,*1}** of the electrolyzer 2. This increases the ramp-up rate of the electrolyzer 2 from **Δ*U*_{*EL,*1}** to **Δ*U*_{*EL,*2}** which is within the required time limit **t*_{Limit}*** from Figure 1. The ramp-up rate may be controlled by a coordinated switching of the electrolysis converter 4 and/or the load converter 6.

In a fifth step S5, the absorption of the electrical power input ***P_{EL}*** by the electrical load 5 is adjusted to zero after the electrolyzer 2 has ramped-up at least partly. For example, this may be achieved by disconnecting the electrical load 5 from the electrolysis converter 4.

The inclusion of the proposed load in the DC side will make it possible to fulfil the requirements of the transmission system operators, regarding the return to a pre-fault operation point within **t*_{Limit}* ≤ 1*s*** even though the electrochemical process of the electrolyzer would otherwise not provide this feature. Therefore, the planed requirements of the different transmission system operators regarding the return to the pre-fault consumption level can be met.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

## Claims

1. Electrolysis system (1) comprising an electrolyzer (2) which is electrically connected to an electrical energy source (3) via an electrolysis converter (4) and adapted to absorb an electrical power input (*P_{EL}*) and to convert the electrical power input (***P_{EL}***) into an energy carrier, wherein the electrolysis converter (4) is adapted to convert an electrical power output (***Pₒᵤₜₚᵤₜ***) provided by the electrical energy source (3) into the electrical power input (***P_{EL}***) and to provide the electrical power input (***P_{EL}***) to the electrolyzer (2),
**characterized in that**
the electrolysis converter (4) is adapted to redirect the electrical power input (***P_{EL}***) at least partly to an electrical load (5) which is adapted to absorb the electrical power input (***P_{EL}***)*.*

2. Electrolysis system (1) according to claim 1, **characterized in that** the electrical load is adjustable in absorbing the electrical power input (***P_{EL}***) between zero and at least a maximum electrical power input level of the electrolyzer (2).

3. Electrolysis system (1) according to one of the preceding claims, **characterized in that** the electrical load (5) is adjustable in absorbing the electrical power input (***P_{EL}***) with a decrease rate of absorbing the electrical power input (***P_{EL}***) being equal to or slower than a maximum ramp-up rate (**Δ*U*_{*EL,*1}**) of the electrolyzer (2) .

4. Electrolysis system (1) according to one of the preceding claims, **characterized in that** the electrical load (5) comprises a load converter (6) which electrically connects the electrical load (5) to the electrolysis converter (4) and which is adapted to adjust the absorption of the electrical power input (***P_{EL}***) by the electrical load (5).

5. Electrolysis system (1) according to one of the preceding claims, **characterized in that** the electrical load (5) is electrically connected to the electrolysis converter (4) in parallel to the electrolyzer (2) or in parallel to the electrical energy source (3).

6. Electrical power system comprising the electrolysis system (1) according to one of the claims 1 to 5.

7. Method for reducing a ramp-up duration (***t*_{*Recovery,*1}**, ***t*_{*Recovery,*2}**) of an electrolysis system (1) comprising an electrolyzer (2) which is connected to an electrical energy source (3) via an electrolysis converter (4), which converts an electrical power output (***Pₒᵤₜₚᵤₜ***) provided by the electrical energy source (3) into an electrical power input (***P_{EL}***) and provides the electrical power input (***P_{EL}***) to the electrolyzer (2) which converts the electrical power input (***P_{EL}***) into an energy carrier, comprising the steps of:
- determining a voltage (***U*₀**) of the electrical power output (***Pₒᵤₜₚᵤₜ***) dropping below a voltage threshold value and/or determining a shutdown of the electrolyzer (2);
- redirecting the electrical power input (***P_{EL}**)* at least partly to an electrical load (5) which absorbs the electrical power input (***P_{EL}***)*.*

8. Method according to claim 7, further comprising the step of:
- adjusting the absorption of the electrical power input (***P_{EL}***) by the electrical load (5) to a maximum electrical power input level of the electrolyzer (2) after the determination of the voltage (***U*₀**) of the electrical power output (***Pₒᵤₜₚᵤₜ***) dropping below the voltage threshold value and/or the shutdown of the electrolyzer (2).

9. Method according to claim 8, **characterized in that** the maximum electrical power input level of the electrolyzer (2) corresponds to an operating point (***U_{Operating}***) of the electrolyzer (2) before the determination of the voltage (***U*₀**) of the electrical power output (***Pₒᵤₜₚᵤₜ***) dropping below the voltage threshold value and/or the shutdown of the electrolyzer (2).

10. Method according to one of the claims 7 to 9, further comprising the step of:
- decreasing simultaneously with ramping-up the electrolyzer (2) the absorption of the electrical power input (***P_{EL}***) by the electrical load (5) with a decrease rate of absorbing the electrical power input (***P_{EL}***) being equal to or slower than a maximum ramp-up rate (**Δ*U*_{*EL,*1}**) of the electrolyzer (2) .

11. Method according to one of the claims 7 to 10, further comprising the step of:
- adjusting the absorption of the electrical power input (***P_{EL}***) by the electrical load (5) to zero after the electrolyzer (2) has ramped-up at least partly.

12. Computer program comprising instructions which, when the program is executed by a controller, particularly by an electrolysis system controller and/or an electrolysis converter controller and/or a load converter controller, cause the controller to carry out the steps of the method according to one of the claims 7 to 11.

13. Computer-readable storage medium having stored thereon the computer program according to claim 12.

14. Controller (7), particularly an electrolysis system controller and/or an electrolysis converter controller and/or a load converter controller, comprising a computer-readable storage medium having stored thereon the computer program according to claim 12 and optionally means to execute the method according to one of the claims 7 to 11.

15. Electrical converter (4) for an electrolysis system, particularly an inverter, comprising the controller (7) according to claim 14.
